# EUROPEAN PATENT APPLICATION

(11) **EP 4 815 227 A2**
(43) Date of publication of application: **30.09.2026**
(21) Application number: 26198387.8
(22) Date of filing: 28.02.2020
(51) Int. Cl.: H02G 1/10

(54) **VESSEL AND METHOD FOR OFFSHORE CABLE LAYING**

(30) Priority: 01.03.2019 NL 2022670; 14.11.2019 NL 2024241
(62) Document number(s) of the earlier application(s) in accordance with Art. 76 EPC: 24170354.5 / 4 376 237; 20710314.4 / 3 931 075
(71) Applicant: Itrec B.V., 3115 HH Schiedam (NL)
(72) Inventor: VEHMEIJER, Terence Willem August, 3115 HH SCHIEDAM (NL); NOUWENS, Ronny Lambertus Waltherus, 3115 HH SCHIEDAM (NL); VAN DEN DONKER, Tim, 3115 HH SCHIEDAM (NL)
(74) Representative: EP&C

(57) **Abstract**

The invention relates to offshore cable laying and provides an overboarding quadrant for lowering a flexible article into the sea, wherein the overboarding quadrant includes a support for supporting and guiding the flexible article along a guide path. According to the invention the support includes a plurality of support segments that are moveable relative to each other between a lowering configuration in which the guide path is arcuate and a releasing configuration in which the guide path is substantially straight. With an overboarding quadrant according to the invention, the risk of damaging the cable during cable laying is reduced.

## Description

The invention relates to a vessel and method for offshore cable laying in which the cable is paid out from a vessel and laid on or in a seabed using the vessel.

The cable to be laid may be a power, electrical or data communication cable, but may also be a flexible article having a similar behaviour as a cable, e.g. umbilicals or flexible pipelines.

The present invention is in particular applicable to the situation in which a cable needs to be laid between two offshore locations in which a first end of the cable is lowered at a first location and subsequently an opposite second end of the cable is lowered at a second location after which a cable portion in between the first and second end is lowered to the seabed using a so-called overboarding quadrant.

A prior art example of a device and method for offshore cable laying can be found in international patent publication WO2018/117833A1.

A drawback of cables and other similar flexible articles is that they can easily be damaged, e.g. when the cable is bend beyond the minimum radius of curvature, twisted too much or handled too roughly, which may for instance be caused by wave-induced motion of the vessel.

**It** is therefore an object of the invention to provide a device and method for offshore cable laying in which the risk of damaging the cable during the method is reduced.

According to a first aspect of the invention, there is provided a vessel for lowering a flexible article, e.g. a cable, into the sea, said vessel comprising:
- a first guide for guiding the flexible article into the sea;
- a second guide for guiding the flexible article into the sea;
- an overboarding quadrant; and
- an article support system for supporting the article,

wherein the article support system includes a first support section extending between the first guide and the overboarding quadrant, and a second support section extending between the second guide and the overboarding quadrant, said overboarding quadrant being configured to support and guide the article between the first support section and the second support section,
wherein the overboarding quadrant is moveable along the first and second support sections between the first and second guide ends of the first and second support section and the opposite ends of the first and second support sections,
wherein the vessel further comprises a quadrant handling system at the first and second guide side of the vessel, which quadrant handling system is configured to move the overboarding quadrant between a substantially horizontal orientation at the first and second support sections and a substantially vertical orientation to lower the overboarding quadrant into the sea,
wherein the vessel further comprises a heave compensation system configured to operate on the overboarding quadrant to compensate for wave-induced heave motion of the vessel in any orientation of the quadrant handling system between the substantially horizontal orientation and the substantially vertical orientation.

Preferably, the heave compensation system is further configured to operate on the overboarding quadrant to compensate for wave-induced heave motion of the vessel in any position of the overboarding quadrant along the first and second support sections.

In an embodiment, the heave compensation system is further configured to operate on the overboarding quadrant to compensate for wave-induced heave motion of the vessel during lowering of the overboarding quadrant towards the sea bottom.

The invention according to the first aspect is based on the insight that undesired vessel motions can be a significant cause for damage to the flexible article. The undesired vessel motions may cause the flexible article to bend beyond the minimal bending curvature as prescribed by the producer of the flexible article thereby resulting for instance in a kink in the cable. One of the undesired vessel motions is wave-induced heave of the vessel.

In the prior art, heave compensation for the overboarding quadrant has been applied before, but only once the overboarding quadrant is released from the quadrant handling system to be lowered into the sea. An advantage of the invention according to the first aspect is that heave compensation should also be applied when the overboarding quadrant is moved along the first and second support sections towards the first and second guide, and when the overboarding quadrant is moved from the substantially horizontal orientation and the substantially vertical orientation by the quadrant handling system. Due to the heave compensation, undesired motions of the flexible article are prevented or at least reduced thereby reducing the risk of damage of the flexible article by the undesired motions.

In an embodiment, the vessel includes a pulling cable connected to the overboarding quadrant and a winch to haul in and pay out the pulling cable. The winch and pulling cable can be used to position the overboarding quadrant along the first and second support sections. When a flexible article is supported by the first and second support sections and around the overboarding quadrant, a tension in the flexible article will then urge the overboarding quadrant towards the first and second guide ends of the first and second support section, and thus towards the quadrant handling system. Paying out the pulling cable by the winch will then move the overboarding quadrant towards the first and second guide ends of the first and second support section, and thus towards the quadrant handling system. Hauling in the pulling cable by the winch will then move the overboarding quadrant in the opposite direction, i.e. away from the first and second guide ends of the first and second support section, and thus away from the quadrant handling system.

It is possible that the winch and pulling cable are part of the heave compensation and the winch is actively controlled to apply heave compensation on top of the normal position control of the overboarding quadrant. It is also possible that the winch is moveably arranged on the vessel, e.g. on a moveable platform, wherein the winch is used for normal position control of the overboarding quadrant and the heave compensation is configured to apply active and/or passive heave compensation to the moveable platform or any other construction responsible for the winch being moveable relative to the vessel.

In an embodiment, the quadrant handling system includes a frame that is moveable between a substantially horizontal orientation such that the overboarding quadrant can be moved over the frame, and a substantially vertical orientation to lower the overboarding quadrant into the sea, wherein the frame at or near a free end of the frame includes a sheave to guide the pulling cable between the overboarding quadrant and the winch when the overboarding quadrant is supported by the frame. During movement of the frame between the horizontal and vertical orientation, the sheave compensation system is able to apply heave compensation to the overboarding quadrant, for instance by:
- applying active heave compensation to the pulling cable using the winch;
- applying active and/or passive heave compensation to the support construction of the winch; and/or
- applying active heave compensation to the frame supporting the overboarding quadrant.

In an embodiment, the quadrant handling system includes a frame that is moveable between a substantially horizontal orientation such that the overboarding quadrant can be moved over the frame, and a substantially vertical orientation to lower the overboarding quadrant into the sea, wherein the frame includes a lowering winch and lowering cable to be connected to the overboarding quadrant, such that heave compensation can be applied to the overboarding quadrant during the movement between horizontal and vertical orientation via the lowering winch and lowering cable. This embodiment may be particularly advantageous when heave compensation in any position of the overboarding quadrant along the first and second support sections is not desired or required.

In an embodiment, the quadrant handling system, e.g. the frame, is arranged in between the first and second guide, preferably at the stern of the vessel.

In an embodiment, the frame includes a rotation axis at or near the stern of the vessel in between the first and second guide and extends parallel to and in between the first and second support sections.

The above described winch and pulling cable may be a first winch and a first pulling cable, wherein the vessel comprises a second winch and a second pulling cable. The second pulling cable may be connected to the overboarding quadrant to apply pulling forces to the overboarding quadrant in an opposite direction than the first pulling cable, thereby allowing to move the overboarding quadrant in both directions without being dependent on the tension in the flexible article.

In an embodiment, the vessel comprises an orientation determination device to determine the orientation of the quadrant handling system, e.g. the frame, and/or to determine the orientation of the overboarding quadrant, wherein the winch or the first and second winches, are to be controlled based on an output of the orientation determination device when the overboarding quadrant is supported by the quadrant handling system.

When the quadrant handling system moves the overboarding quadrant from the horizontal orientation to the vertical orientation, the length of pulling cable between the overboarding quadrant and the winch required to keep the overboarding quadrant in the same position relative to the quadrant handling system, e.g. along the frame, will increase. By determining the orientation of the quadrant handling system, the frame or the overboarding quadrant itself, the winch can be controlled to compensate for this increase by paying out the pulling cable. In addition thereto, heave compensation may be applied to the overboarding quadrant.

In an embodiment, the quadrant handling system and/or the overboarding quadrant include corresponding coupling means to temporarily couple the overboarding quadrant to the quadrant handling system such that the overboarding quadrant is moveable in a direction along the quadrant handling system for heave compensation purposes and for lowering he overboarding quadrant into the sea, and such that movement in at least one other direction is prevented. This may have for instance the advantage that the motion between the horizontal and vertical orientation is controlled in directions in which undesired motions are expected to avoid undesired collisions between quadrant handling system and overboarding quadrant and minimizes damage.

The invention according to the first aspect also relates to a method for lowering a flexible article into the sea using a vessel comprising:
- a first guide for guiding the flexible article into the sea;
- a second guide for guiding the flexible article into the sea;
- an overboarding quadrant;
- an article support system for supporting the article; and
- a quadrant handling system at the first and second guide side of the vessel,

wherein the article support system includes a first support section extending between the first guide and the overboarding quadrant, and a second support section extending between the second guide and the overboarding quadrant, said overboarding quadrant being configured to support and guide the article between the first support section and the second support section,
wherein the overboarding quadrant is moveable along the first and second support sections between the first and second guide ends of the first and second support section and the opposite ends of the first and second support sections,
and wherein the method comprises the following steps:
   a) supporting a flexible article extending between the first guide and the second guide via the overboarding quadrant by the first support section, the second support section, and the overboarding quadrant;
   b) moving the overboarding quadrant along the first and second upper sections towards the first and second guide;
   c) moving the overboarding quadrant from a substantially horizontal orientation at the first and second support sections towards a substantially vertical orientation using the quadrant handling system; and
   d) lowering the overboarding quadrant into the sea,
wherein heave compensation of the overboarding quadrant is applied at least partially during steps c) and d), and preferably also during step b).

According to a second aspect of the invention, there is provided an overboarding quadrant for lowering a flexible article into the sea, wherein the overboarding quadrant includes a support for supporting and guiding the flexible article along a guide path, wherein the support includes a plurality of support segments that are moveable relative to each other between a lowering configuration in which the guide path is arcuate and a releasing configuration in which the guide path is substantially straight.

In prior art lowering and release methods, the overboarding quadrant is lowered to above the sea bottom, and subsequently rotated to release the flexible article from the overboarding quadrant to drop the flexible article onto the sea bottom. However, this means that during the drop, the flexible article is free to move and due to the considerable overlength can bend in undesired ways that may result in damage to the flexible article.

An advantage of the overboarding quadrant according to the second aspect of the invention is that by changing the arcuate guide path to a substantially straight guide path the overlength in the flexible article may be reduced and/or the flexible article may be released from a smaller distance from the sea bottom to provide a more controlled drop of the flexible article and thus reduces the risk of damage to the flexible article.

In an embodiment, the support segments are only rotatable relative to each other between a first angular orientation corresponding to the lowering configuration and a second angular orientation corresponding to the releasing configuration. In this way, the moveability, i.e. the flexibility of the overboarding quadrant is limited to the lowering and releasing configurations and any intermediate configuration, but other configurations are not possible.

In an embodiment, the overboarding quadrant is configured such that the guide path has a single radius of curvature over its entire length in the lowering configuration and each intermediate configuration between the lowering configuration and the releasing configuration. Hence, when moving the support segments between the lowering configuration and the releasing configuration, the radius of curvature of the guide path gradually increases from the value corresponding to the lowering configuration to an infinite value corresponding to the releasing configuration.

Preferably, the support segments are linked together such that when one support segment is moved relative to an adjacent support segment, the radius of curvature along the entire guide path is changed and thus all support segments move accordingly. This allows to actuate at one or more locations and change the entire shape of the support.

In an embodiment, the overboarding quadrant includes an actuating system to move the support segments between the lowering and releasing configuration. However, external actuation, e.g. using operating wires pulling on one or more support segments, and/or passive actuation, e.g. by allowing one or both ends of the actuating system to engage with the sea bottom during lowering, are also envisaged.

In an embodiment, the overboarding quadrant includes a locking mechanism to lock the position of the support segments, preferably in the lowering configuration and/or releasing configuration, and possibly also in one or more or any intermediate position.

In an embodiment, the guide path is semi-circular in the lowering configuration with both ends of the support extending in the same direction.

The second aspect of the invention also relates to a method for lowering a flexible article into the sea from a vessel, wherein use is made of an overboarding quadrant comprising a support for supporting and guiding the flexible article along a guide path, and wherein the method comprises the following steps:
a) configuring the overboarding quadrant such that the guide path is arcuate;
b) arranging a flexible article along the arcuate guide path with both ends of the flexible article extending into the sea;
c) positioning the overboarding quadrant such that the arcuate guide path is in a substantially vertical plane;
d) lowering the overboarding quadrant into the sea; and
e) adjusting the overboarding quadrant to change the shape of the guide path to be straight.

In an embodiment, after step e), the overboarding quadrant is close to or on the sea bottom, and preferably, the flexible article is then released from the overboarding quadrant to stay on the sea bottom while the overboarding quadrant is raised to the vessel.

Releasing of the flexible article from the overboarding article can be done one of the following ways (non-limitative list):
- rotating about a longitudinal axis of the support;
- releasing clamps holding the flexible articles;
- removing support members supporting the flexible article; and
- manipulating the flexible article to move away from the overboarding quadrant.

However, it is also possible that the overboarding quadrant including flexible article is released in its entirety to stay behind on the sea bottom or to be retrieved later.

In an embodiment, the overboarding quadrant mentioned above is used, wherein in steps a) - d) the overboarding quadrant is in the lowering configuration and in step e) is brought into the releasing configuration.

In an embodiment, two wires are connected to the overboarding quadrant during at least steps d) and e), wherein one wire is used to support the weight of the overboarding quadrant and any load applied thereto, and wherein the other wire is used to change the shape of the guide path.

In an embodiment, two or more wires are connected to the overboarding quadrant during at least steps d) and e), wherein the change of shape caused in step e) is the result of applying an (additional) tension difference between the two or more wires.

According to a third aspect of the invention, there is provided a vessel for lowering a flexible article into the sea, said vessel comprising:
- a first storage unit for storing a flexible article;
- a second storage unit for storing a flexible article;
- a first guide for guiding the flexible article into the sea;
- a second guide for guiding the flexible article into the sea;
- an article support system for supporting the article between the first and second storage units and the first and second guides; and
- an overboarding quadrant,

wherein the article support system includes a first support section extending between the first guide and the overboarding quadrant, a second support section extending between the second guide and the overboarding quadrant, said overboarding quadrant being configured to support and guide the flexible article between the first support section and the second support section, and a third support section extending between the first storage unit and the second support section such that a main portion of the first support section is arranged in between the second support section and the third support section,
and wherein the article support system further includes a fourth support section extending between the second storage unit and the first support section such that a main portion of the second support section is arranged in between the first support section and the fourth support section.

An advantage of the third aspect of the invention is that a more or less symmetrical layout of the article support system can be obtained which increases efficiency and/or laying capacity, but may also allow for the simultaneous laying of two cables, one originating from the first storage unit and the other one originating from the second storage unit.

In an embodiment, all support sections are straight and parallel to each other over the majority of their length.

In an embodiment, the vessel comprises a first tensioner arranged in or along the first support section. Alternatively, or additionally, the vessel comprises a second tensioner arranged in or along the second support section. The first and/or second tensioner are configured to control movement of the flexible article along the first and second support section, respectively.

The third aspect of the invention also relates to a method for lowering a flexible article into the sea, wherein use is made of a vessel according to the third aspect of the invention, and wherein the method comprises the following steps:
a) lowering a first flexible article from the first storage unit into the sea along a path comprising the third support section, the second support section, the overboarding quadrant, the first support section and the first guide; and
b) lowering a second flexible article from the second storage unit into the sea along a path comprising the fourth support section, the first support section, the overboarding quadrant, the second support section and the second guide.

According to a fourth aspect of the invention, there is provided a vessel for lowering a flexible article into the sea, said vessel comprising:
- a storage unit for storing a flexible article;
- a first guide for guiding the flexible article into the sea;
- a second guide for guiding the flexible article into the sea;
- an article support system for supporting the article between the storage unit and the first and second guides; and
- an overboarding quadrant,

wherein the article support system includes a first support section extending between the first guide and the overboarding quadrant, a second support section extending between the second guide and the overboarding quadrant, said overboarding quadrant being configured to support and guide the flexible article between the first support section and the second support section, and a third support section extending between the storage unit and the second support section,
wherein the article support system is configured to provide a first support path for the flexible article extending from the storage unit along the third support section and via the second support section to the overboarding quadrant and subsequently from the overboarding quadrant to the first guide along the first support section,
and wherein the article support system comprises a short-cut to provide a second support path for the flexible article extending from the storage unit, possibly along a portion of the third support section, directly to the first support section towards the first guide thereby bypassing at least a portion of the third support section, the second support section and the overboarding quadrant.

An advantage of a vessel according to the fourth aspect of the invention is that a shorter path, namely the second support path is available to reel a flexible article on the storage unit and/or the vessel can also be used for cable laying a cable from shore to shore or from shore to an installation above sea level or to lay cable without using a buffer.

The fourth aspect of the invention can readily be combined with the third aspect of the invention, so that the shorter support path is available for both the first and second storage units.

The fourth aspect of the invention also relates to a method for using a vessel according to the fourth aspect of the invention, said method comprising the following steps:
a) reeling a flexible article onto the storage unit via the second support path; and
b) lowering a flexible article into the sea from the storage unit while advancing the flexible article along the first support path, or
c) lowering a flexible article into the sea from the storage unit while advancing the flexible article along the second support path.

According to a fifth aspect of the invention, there is provided a vessel for lowering a flexible article into the sea, said vessel comprising:
- a storage unit for storing a flexible article;
- a guide for guiding the flexible article into the sea;
- an article support system for supporting the article between the storage unit and the guide along a support path; and
- a tensioner arranged in or along the support path to control movement of the flexible article along the support path,
wherein the tensioner as a whole is moveable in a direction parallel to the support path at the location of the tensioner to allow to compensate for wave-induced motion of the vessel.

An advantage of the vessel according to the fifth aspect of the invention is that the tensioner as a whole is moved to compensate for wave-induced motion of the vessel instead of using the tensioner itself to move the flexible article back and forth to compensate for wave-induced motion, which decreases the dynamic load applied to the flexible article and reduced the risk of damaging the flexible article with the tensioner.

In an embodiment, the tensioner is supported by a platform, which platform is moveable relative to the vessel in a direction parallel to the support path.

In an embodiment, the vessel includes a heave compensation system configured to apply heave compensation to the tensioner as a whole to allow to compensate for wave-induced heave motion of the vessel.

It is noted that "tensioner as a whole" is to be interpreted as at least the engaging portion of the tensioner so that the engaging portion moves along with the flexible article and does not have to move the flexible article for wave-induced motion compensation. Other parts of the tensioner do not necessarily have to move along although it may be preferred to move all components that are fixed to the engaging portion as a single unit, so that standard tensioners can be used.

The fifth aspect of the invention also relates to a method for lowering a flexible article into the sea, wherein use is made of the vessel according to the fifth aspect of the invention, said method comprising the following steps:
a) holding the flexible article with the tensioner; and
b) moving the tensioner as a whole to compensate for wave-induced motion of the vessel.

According to a sixth aspect of the invention, there is provided a vessel for lowering a flexible article into the sea, said vessel comprising:
- a storage unit for storing a flexible article;
- a first guide for guiding the flexible article into the sea;
- a second guide for guiding the flexible article into the sea;
- an overboarding quadrant;
- an article support system for supporting the article between the storage unit and the first and second guides; and
- a quadrant handling system arranged at the first and second guide side of the vessel,

wherein the article support system includes a first support section extending between the first guide and the overboarding quadrant, and a second support section extending between the second guide and the overboarding quadrant, said overboarding quadrant being configured to support and guide the article between the first support section and the second support section,
wherein the overboarding quadrant is moveable along the first and second support sections between the first and second guide ends of the first and second support section and the opposite ends of the first and second support sections,
wherein the quadrant handling system is configured to move the overboarding quadrant between a substantially horizontal orientation at the first and second support sections and a substantially vertical orientation to lower the overboarding quadrant into the sea,
and wherein the quadrant handling system is configured to guide lowering of the overboarding quadrant beyond the splash zone.

An advantage of the sixth aspect of the invention is that the lowering of the overboarding quadrant is guided and thus more controlled beyond the splash zone, so that entering the water with the overboarding quadrant has a minimal effect on the flexible article itself. As a result thereof the risk of damaging the flexible article is reduced.

In an embodiment, the quadrant handling system includes a frame having a rotation axis at or near the stern of the vessel to rotate the frame between a substantially horizontal orientation and a substantially vertical orientation, wherein in the vertical orientation the frame has an upper portion extending above the rotation axis to receive the overboarding quadrant in the horizontal orientation, and a lower portion extending below the rotation axis to guide the overboarding quadrant into the sea beyond the splash zone.

The sixth aspect of the invention also relates to a method for lowering the overboarding quadrant into the sea, wherein use is made of a vessel according to the sixth aspect of the invention, and wherein the method comprises the following steps:
a) moving the overboarding quadrant towards the first and second guide side of the vessel;
b) moving the overboarding quadrant from the horizontal orientation to the vertical orientation; and
c) lowering the overboarding quadrant into the sea beyond the splash zone while being guided by the quadrant handling system.

According to a seventh aspect of the invention, there is provided a vessel for lowering a flexible article, e.g. a cable, into the sea, said vessel comprising:
- a storage unit for storing the flexible article;
- a first guide for guiding the flexible article into the sea in a first guiding direction;
- a second guide for guiding the flexible article into the sea in a second guiding direction; and
- an article support system for supporting the article between the storage unit and the first guide and between the first guide and the second guide,
wherein the first guide is moveable in a horizontal direction transverse to the first guiding direction, and wherein the second guide is moveable in a horizontal direction transverse to the second guiding direction, to allow compensation of wave-induced motion of the vessel.

An advantage of the vessel according to the seventh aspect of the invention is that wave-induced motion of the vessel in a direction transverse to a longitudinal axis of the vessel can easily be compensated for. In combination with the first and/or fourth aspect of the invention, in principle all wave-induced motions of the vessel can be compensated for to a certain degree.

The seventh aspect of the invention also relates to a method for lowering a flexible article into the sea, wherein use is made of a vessel according to the seventh aspect of the invention, and wherein the method comprises the following steps:
a) lowering a flexible article into the sea over the first and/or second guide; and
b) moving the first and/or second guide to compensate for wave-induced motions of the vessel.

According to an eighth aspect of the invention, there is provided a vessel for lowering a flexible article, e.g. a cable, into the sea, said vessel comprising:
- a storage unit for storing a flexible article;
- a first guide for guiding the flexible article into the sea;
- a second guide for guiding the flexible article into the sea;
- an overboarding quadrant; and
- an article support system for supporting the article between the storage unit and the first and second guides,

wherein the article support system includes a first support section extending between the first guide and the overboarding quadrant, and a second support section extending between the second guide and the overboarding quadrant, said overboarding quadrant being configured to support and guide the article between the first support section and the second support section, and a third support section extending between the storage unit and the second support section,
wherein the vessel further includes a frame supporting at least the first guide, the second guide, the first support section, the second support section and the overboarding quadrant, and wherein the frame is moveable relative to a deck of the vessel in a substantially horizontal plane to compensate for wave-induced motion of the vessel.

In an embodiment, the storage unit is a first storage unit and the vessel further comprises a second storage unit for storing a flexible article, wherein the article support system includes a fourth support section extending between the second storage unit and the first support section.

In an embodiment, a part of the third support section is supported by the frame.

In an embodiment, a part of the fourth support section is supported by the frame.

In an embodiment, a support structure is arranged on the frame that is part of both the third and fourth support sections.

In an embodiment, the support structure arranged on the frame is moveable relative to the frame to adjust for article length differences between moveable frame and fixed storage unit caused by the movement of the frame relative to the deck of the vessel.

In an embodiment, the deck of the vessel is provided with rails extending in a transverse direction of the vessel, wherein the vessel includes an actuation system between the rails and the frame, wherein the actuation system is configured to move the frame in a direction parallel to the rails, and wherein the actuation system is further configured to move the frame in a direction parallel to a longitudinal axis of the vessel.

In an embodiment, the overboarding quadrant is connectable to a carriage that is moveable in a direction parallel to the longitudinal axis of the frame between a location at or near the first and second support sections and a location at a larger distance from the first and second support sections.

In an embodiment, the overboarding is connected or connectable to a winch by a pulling cable to position the overboarding quadrant over and along the first and second support sections.

In an embodiment, the vessel further includes a quadrant handling system at the first and second guide side of the frame, which quadrant handling system is configured to receive the overboarding quadrant and to move the overboarding quadrant between a substantially horizontal orientation at the first and second support sections and a substantially vertical orientation to lower the overboarding quadrant into the sea.

In an embodiment, the vessel includes a tensioner arranged on the frame in the first or second support section to control movement of the flexible article along the first or second support section, respectively. Preferably, the tensioner is arranged at an end of the first or second support section opposite the corresponding first or second guide.

In an embodiment, the tensioner is a first tensioner and arranged in the first support section, and the vessel includes a second tensioner arranged on the frame in the second support section to control movement of the flexible article along the second support section.

In an embodiment, the frame is moveable in said substantially horizontal plane by being rotatable about a substantially vertical axis and by being translatable in a longitudinal direction of the frame.

The eighth aspect of the invention also relates to a method for lowering a flexible article into the sea, wherein use is made of the vessel according to the eighth aspect of the invention, said method comprising the following steps:
a) lowering a flexible article into the sea using at least the storage unit, the article support system, and the first and/or second guide,
b) moving the frame to compensate for wave-induced motions of the vessel.

In an embodiment, the frame is moved to compensate for the effect of the wave-induced motions of the vessel on the location where the lowered flexible article contacts a bottom of the sea. In an embodiment, such compensation is obtained by controlling movement of the frame in the horizontal plane to keep an exit point where the article leaves the first and/or second guide at the same position relative to the bottom of the sea independent of vessel motions in said horizontal plane and to haul in or pay out the flexible article to compensate for heave of the vessel, e.g. as explained in the first aspect of the invention. As a result thereof, the shape of the article between vessel and the contact location at the bottom of the sea is minimally affected. However, in another embodiment, other shapes between vessel and contact location are allowed while maintaining the position of the contact location, thereby allowing to minimize or remove heave compensation.

In an embodiment, a support structure is arranged on the frame, wherein the support structure arranged on the frame is moveable relative to the frame, and wherein at least for a predetermined time during step b) the support structure is moved relative to the frame to adjust for article length differences between moveable frame and fixed storage unit caused by movement of the frame relative to the deck of the vessel.

In an embodiment, the overboarding quadrant is connectable to a carriage that is moveable in a direction parallel to the longitudinal axis of the frame between a location at or near the first and second support sections and a location at a larger distance from the first and second support sections, wherein at least for a predetermined time during step b), the carriage is moved relative to the frame to adjust for article length differences caused by movement of the frame and/or heave compensation.

It will be apparent to the skilled person that various aspects of the invention can be combined where possible. Hence, features and embodiments described in relation to one aspect may also be combined with other aspects and or not repeated to avoid unduly repetition and keep the specification concise.

According to a ninth aspect of the invention, there is provided a vessel for lowering a flexible article, e.g. a cable, into the sea, said vessel comprising:
- a storage unit for storing the flexible article;
- a first guide for guiding the flexible article into the sea in a first guiding direction;
- a second guide for guiding the flexible article into the sea in a second guiding direction; and
- an article support system for supporting the article between the storage unit and the first guide and between the first guide and the second guide,
wherein the first guide is moveable in a horizontal direction parallel to the first guiding direction, and wherein the second guide is moveable in a horizontal direction transverse to the second guiding direction, to allow compensation of wave-induced motion of the vessel.

An advantage of the vessel according to the ninth aspect of the invention is that wave-induced motion of the vessel in a direction parallel to a longitudinal axis of the vessel can easily be compensated for. In combination with the first and/or the fourth and/or the seventh aspect of the invention, in principle all wave-induced motions of the vessel can be compensated for to a certain degree.

The ninth aspect of the invention also relates to a method for lowering a flexible article into the sea, wherein use is made of a vessel according to the ninth aspect of the invention, and wherein the method comprises the following steps:
a) lowering a flexible article into the sea over the first and/or second guide; and
b) moving the first and/or second guide to compensate for wave-induced motions of the vessel.

According to a tenth aspect of the invention, there is provided a method for lowering a flexible article into the sea, wherein use is made of a vessel, and wherein the method comprises the following steps:
a) connecting the flexible article to a winch external of the vessel;
b) lowering the flexible article into the sea while the flexible article is connected to the flexible article; and
c) controlling operation of the winch using a control system on the vessel.

An advantage of the method according to the tenth aspect of the invention is that the flexible article can be controlled at two distinct locations, thereby allowing to prevent damage to the cable during the method.

In an embodiment, controlling is based on a tension in the flexible article.

In an embodiment, controlling is aimed at keeping the tension in the flexible article substantially constant.

In an embodiment, lowering the flexible article is stopped when the tension in the flexible article gets above a predetermined threshold.

The tenth aspect of the invention also relates to a vessel for lowering a flexible article into the sea, said vessel comprising:
- a storage unit for storing a flexible article;
- a guide for guiding the flexible article into the sea;
- an article support system for supporting the article between the storage unit and the guide; and
- a control system for lowering the flexible article from the storage unit via the article support system and the guide into the sea,
wherein the control system is configured to control a winch external from the vessel and connected to the flexible article during lowering of the flexible article.

According to a eleventh aspect of the invention, there is provided a vessel for lowering a flexible article, e.g. a cable, into the sea, said vessel comprising:
- a storage unit for storing a flexible article;
- a first guide for guiding the flexible article into the sea;
- a second guide for guiding the flexible article into the sea;
- an overboarding quadrant; and
- an article support system for supporting the flexible article between the storage unit and the first and second guides,

wherein the article support system includes a first support section extending between the first guide and the overboarding quadrant, and a second support section extending between the second guide and the overboarding quadrant, said overboarding quadrant being configured to support and guide the article between the first support section and the second support section, and a third support section extending between the storage unit and the second support section,
wherein the vessel further includes a frame supporting at least the first support section, the second support section and the overboarding quadrant,
and wherein the frame is pivotable relative to a deck of the vessel about a substantially horizontal pivot axis extending transverse to a longitudinal axis of the frame between a substantially horizontal position and an elevated position.

In an embodiment, the elevated position is a substantially vertical position of the frame.

In an embodiment, the storage unit is a first storage unit and the vessel further comprises a second storage unit for storing a flexible article, and wherein the article support system includes a fourth support section extending between the second storage unit and the first support section.

In an embodiment, the article support system includes at least one tensioner, preferably arranged in the first and/or second support section, said tensioner configured to apply tension to the flexible article.

According to a twelfth aspect of the invention, there is provided a vessel for lowering a flexible article, e.g. a cable, into the sea, said vessel comprising:
- a storage unit for storing a flexible article;
- a guide for guiding the flexible article into the sea; and
- an article support system for supporting the article between the storage unit and the guide,
wherein the guide has an upper portion guiding the flexible article above a splash zone and a lower portion guiding the flexible article below the splash zone.

In an embodiment, the lower and upper portion are mounted to each other or integrated such that the guide is configured to guide the flexible article along its entire length between a location where the flexible article enters the guide and a location where the flexible article leaves the guide.

In an embodiment, the guide has a closed outer contour with an inlet opening at the upper portion to allow the flexible article to enter the guide and an outlet opening at the lower portion to allow the flexible article to leave the guide.

In an embodiment, the closed outer contour has a cross-sectional size that increases from the inlet opening at the upper portion to the opening at the lower portion, preferably gradually increases. In other words, the guide diverges from upper to lower portion allowing to guide the flexible article in a plurality of directions.

In an embodiment, the closed outer contour has a substantially paraboloid or hyperboloid or similar-like shape, that may be truncated at one or both ends.

In an embodiment, the inlet opening and/or the outlet opening have a circular shape.

In an embodiment, the inlet opening and/or the outlet opening extend in a plan having a normal that extends substantially vertically. Alternatively, said normal extends substantially horizontally.

In an embodiment, the upper and lower portion have a substantially cylindrical shape.

In an embodiment, the lower portion is rotatable relative to the upper portion to allow the outlet opening to be directed in a plurality of directions.

In an embodiment, the guide has a main guiding surface to mainly engage with the flexible article and two side walls extending from the main guiding surface to define a space in between the two side walls, wherein an opening is provided opposite the main guiding surface to allow the flexible article to enter and leave the space.

In an embodiment, the upper and lower portion of the guide are arranged at a distance from each other such that a single trajectory for the flexible article is defined between the upper and lower portion.

It is explicitly noted here that any features or embodiments described in relation to one aspect of the invention, may, where appropriate, be combined with features or embodiments of other aspects of the invention.

The invention will now be described in a non-limiting way by reference to the accompanying drawings in which like parts are indicated using like reference symbols, and in which:
Fig. 1 depicts a cross-sectional view of a vessel according to an embodiment of the invention;
Fig. 2 depicts a plan view of the vessel of Fig. 1;
Fig. 3 depicts a perspective rear view of a stern of a vessel according to an embodiment different but similar to the embodiment of Figs 1 and 2 while lowering an overboarding quadrant into the sea;
Fig. 4 depicts a perspective top view of a vessel according to another embodiment of the invention;
Fig. 5 depicts a perspective side view of the vessel of Fig. 4;
Fig. 6 depicts a top view of the vessel of Fig. 4 with a frame carrying cable laying equipment in a central position of a substantially horizontal plane;
Fig. 7 depicts a top view of the vessel of Fig. 4 with the frame in one corner of the substantially horizontal plane;
Fig. 8 depicts a top view of the vessel of Fig. 4 with the frame in an opposite corner of the substantially horizontal plane;
Fig. 9 depicts an initial cable curve, an uncompensated cable curve after vessel motion and a compensated cable curve after vessel motion between vessel and a bottom of a sea;
Fig. 10 depicts a top view of a vessel according to an embodiment of the eighth aspect of the invention;
Fig. 11 depicts a guide for a vessel according to an embodiment of the twelfth aspect of the invention;
Fig. 12 depicts a guide for a vessel according to another embodiment of the twelfth aspect of the invention;
Fig. 13 depicts a guide for a vessel according to yet another embodiment of the twelfth aspect of the invention; and
Fig. 14 depicts a guide for a vessel according to a further embodiment of the twelfth aspect of the invention.

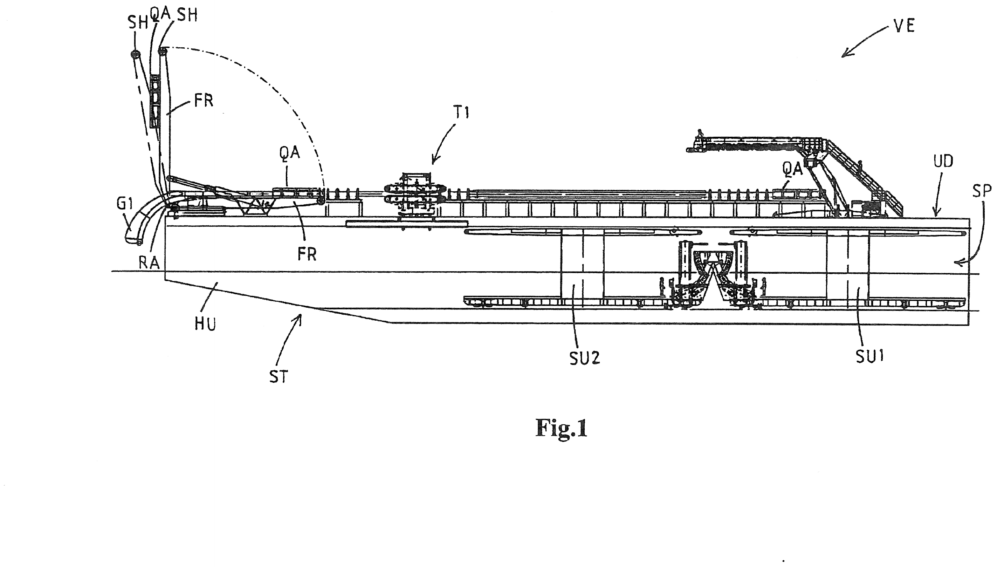

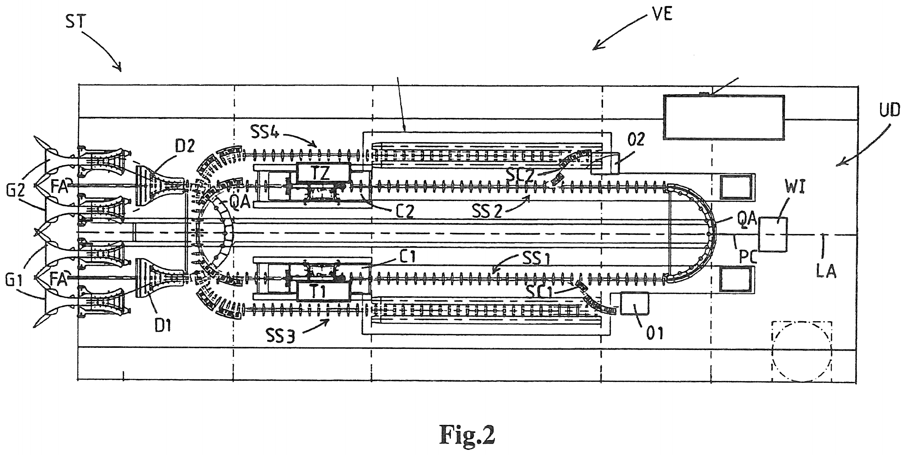

Figs. 1 and 2 depict a cross-sectional view and plan view, respectively, of a vessel VE according to an embodiment of the invention. For conciseness and clarity reasons, the exemplary vessel VE of Fig. 1 is used to show and describe all aspects of the invention. However, although this provides a clear example of how various aspects of the invention can be combined in the design of a single vessel, it is explicitly noted here that each aspect of the invention can be applied to a vessel and used in a method in isolation as well and thus that combinations of various aspect of the invention are not necessary per se.

The vessel VE comprises a hull HU, here a monohull, providing buoyancy to the vessel VE and supporting and accommodating all equipment. Figs. 1 and 2 only depict a stern ST side of the vessel VE. The bow, usually also holding a superstructure to accommodate personnel, etc., is not depicted here and also not relevant for the present invention or aspects thereof.

The hull HU defines an upper deck UD with a space SP below the upper deck UD in this example accommodating two storage units SU1, SU2 in the form of reels which are rotatable about a substantially vertical axis. The storage units SU1, SU2 are configured to store a certain length of flexible article, e.g. a cable. In this embodiment, the storage units SU1, SU2 are arranged substantially permanently inside the space SP. A cable may be reeled onto a storage unit from an onshore source or from another vessel. In an alternative embodiment, the storage units SU1, SU2 are exchangeable, so that a filled storage unit may be exchanged with an empty storage unit.

At the stern ST of the vessel, a first guide G1 and a second guide G2 for guiding the flexible article into the sea are shown. The first and second guides G1, G2 are in this embodiment chutes which are moveable in a horizontal direction transverse to a longitudinal axis LA of the vessel VE. To show this movability of the first and second guides G1, G2, the first and second guides G1, G2 are depicted in Fig. 2 in their two extremes at the same time. Hence, although it seems at first glance that the vessel comprises four guides when looking at Fig. 2, it actually are two guides shown in two distinct positions on the upper deck UD.

The vessel VE further comprises an article support system for supporting the article and an overboarding quadrant QA.

The article support system includes a first support section SS1 extending between the first guide G1 and the overboarding quadrant, a second support section SS2 extending between the second guide G2 and the overboarding quadrant QA, a third support section SS3 extending between the first storage unit SU1 and the second support section SS2, and a fourth support section SS4 extending between the second storage unit SU2 and the first support section SS1. In Fig. 2, a first opening O1 and a second opening O2 are shown where the first and second storage units, respectively, are able to provide a flexible article to the third and fourth support section, respectively.

This allows a flexible article originating from the first storage unit SU1 to be lowered into the sea by travelling along a support path subsequently including the third support section SS3, the second support section SS2, the overboarding quadrant QA, the first support section SS1 and the first guide G1. It also allows a flexible article originating from the second storage unit SU2 to be lowered into the sea by travelling along a support path subsequently including the fourth support section SS4, the first support section SS1, the overboarding quadrant QA, the second support section SS2, and the second guide G2.

The first support section SS1 includes a diverter D1 to guide the flexible article from the first support section towards the first guide independent of the transverse position of the first guide G1.

The second support section SS2 includes a diverter D2 to guide the flexible article from the second support section towards the second guide independent of the transverse position of the second guide G2.

The combination of diverter D1 and the first guide G1, and the combination of diverter D2 and the second guide G2 are preferably configured such that the radius of curvature of the flexible article is always above a predetermined minimal value independent of the transverse position of the respective guide G1, G2.

The vessel VE comprises a first short-cut SC1 between the first opening O1 and the first support section allowing to bypass the third support section SS3, the second support section SS2 and the overboarding quadrant QA and provide a direct path from the first storage unit SU1 to the first guide G1 via the first support section SS1.

The vessel VE also comprises a second short-cut SC2 between the second opening O2 and the second support section allowing to bypass the fourth support section SS4, the first support section SS1 and the overboarding quadrant QA and provide a direct path from the second storage unit SU1 to the second guide G2 via the second support section SS2.

Provided in the first support section is a first tensioner T1 to engage with the flexible article in order to move the flexible article along the first support section SS1. The first tensioner T1 is provided on a first carriage C1 that is moveable in a longitudinal direction of the vessel VE to compensate for wave-induced motions of the vessel, e.g. heave motions.

Provided in the second support section is a second tensioner T2 to engage with the flexible article in order to move the flexible article along the second support section SS2. The second tensioner T2 is provided on a second carriage C2 that is moveable in a longitudinal direction of the vessel VE to compensate for wave-induced motions of the vessel, e.g. heave motions.

The first, second, third and fourth support sections are arranged mainly parallel to each other and such that the second support section is arranged in between the fourth support section and the first support section, and the first support section is arranged in between third support section and the second support section, thereby obtaining a more or less symmetrical layout for use with both the first and second storage units.

The overboarding quadrant QA is moveable in longitudinal direction of the vessel along the first and second support sections and is configured to support and guide the flexible article between the first and second support sections. The overboarding quadrant is moveable between the two opposite ends of the first and second support sections as depicted in Fig. 2, where the quadrant is shown in two distinct locations. The tensioners T1 and T2 are configured to disengage from the flexible article and/or move away from the first and second support sections to allow the passage of the overboarding quadrant is necessary.

The overboarding quadrant can be used to provide a buffer with flexible article on the vessel, but is mainly used for lowering the flexible article into the sea and/or to provide heave compensation to the flexible article.

The overboarding quadrant is connected to a winch WI via a pulling cable PC to allow the overboarding quadrant to be moved.

When the overboarding quadrant is in the shown position at the first and second guide side of the first and second support sections, the overboarding quadrant is positioned over a frame FR of a quadrant handling system, which is best shown in Fig. 1. The frame FR can be moved between a substantially horizontal orientation and a substantially vertical orientation by rotating about a rotation axis RA to move the quadrant between a substantially horizontal orientation and a substantially vertical orientation to lower the quadrant into the sea. In Fig. 1, the overboarding quadrant and the frame are shown in three positions, a substantially horizontal orientation, a substantially vertical orientation and an inclined orientation in dashed lines which may be used after the overboarding quadrant has left the frame FR to create more distance between overboarding quadrant and vessel.

It is to be noted that in Fig. 2, the flexible article FA is shown to extend from the first guide G1 to the second guide G2 via the overboarding quadrant QA, which may be the situation prior to lowering the overboarding quadrant and flexible article into the sea. The overboarding quadrant is then first moved from the position near the winch WI to the position near the diverters D1, D2, preferably while heave compensating the overboarding quadrant using the winch WI and pulling cable PC. Subsequently, the overboarding quadrant is rotated to the substantially vertical orientation. The pulling cable PC is then preferably arranged over a sheave SH arranged at the free end of the frame FR so that the winch WI and the pulling cable PC are able to keep positioning the quadrant on the frame during rotation of the frame, and preferably while heave compensating the quadrant on the frame.

The quadrant can then be lowered into the sea by paying out the pulling cable PC, preferably also while heave compensating the quadrant.

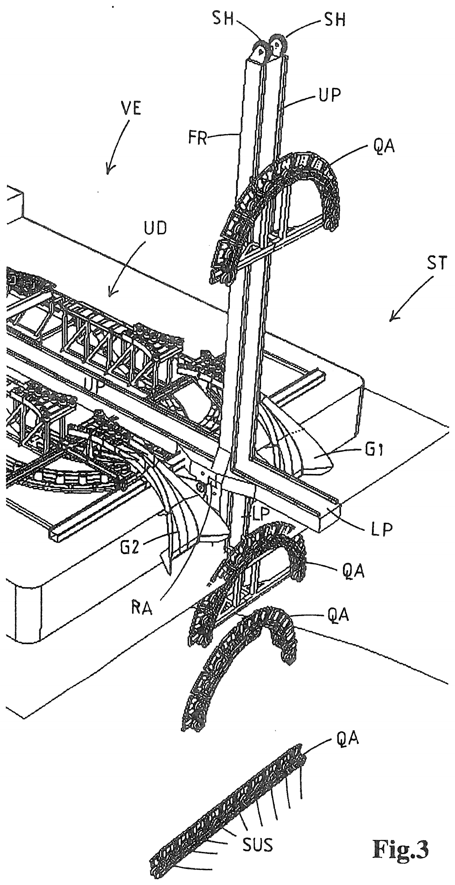

Fig. 3 depicts the stern of a vessel VE according to an embodiment different but similar to the embodiment of Figs. 1 and 2.

One difference is that the frame FR of the quadrant handling system, which is shown in two orientations in Fig. 3, has both an upper portion UP extending above the rotation axis RA and a lower portion LP extending below the rotation axis RA seen in the vertical orientation of the frame FR, which lower portion extends into the water in the vertical orientation to guide the quadrant beyond the splash zone into the water, preferably while heave compensating the quadrant QA.

The quadrant in Fig. 3 has a support with a plurality of support segments SUS that are moveable relative to each other, so that the guide path as provided by the support can be arcuate in a lowering configuration as shown in Fig. 1, 2 and in Fig. 3 for the three upper positions of the quadrant, and so that the guide path can be straight as shown in the lower position of the quadrant in Fig. 3 when the quadrant is near the sea bottom.

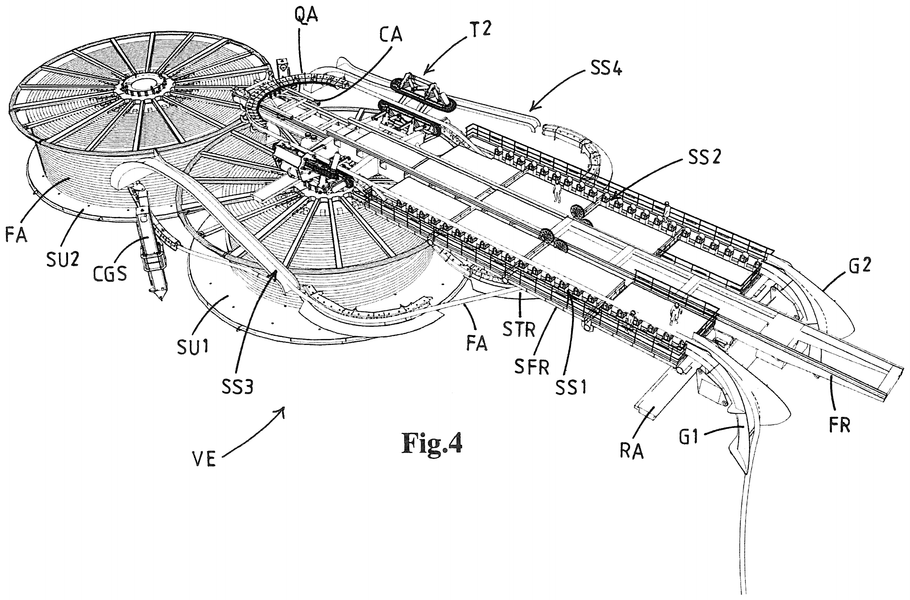

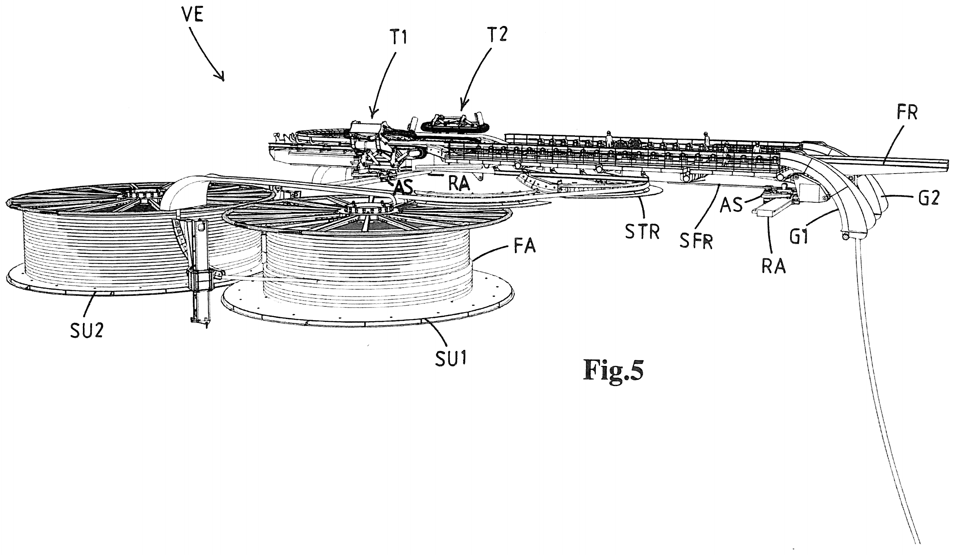

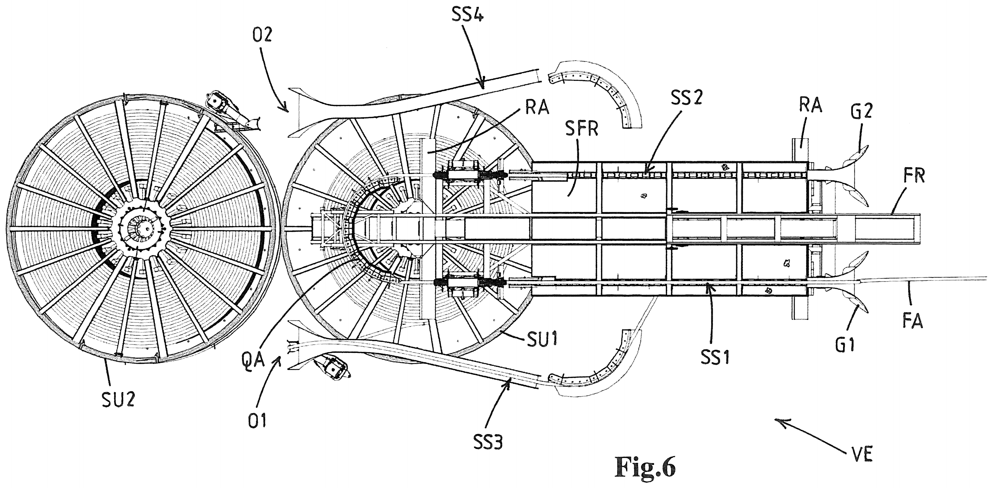

Figs. 4-8 depict a vessel VE according to another embodiment of the invention, where Fig. 4 depicts a perspective top view, Fig. 5 depicts a perspective side view and Figs. 6-8 depict top views of the vessel VE.

The vessel VE may be of the type as shown in Figs. 1-3, but the hull and decks of the vessel are omitted for clarity reasons. Shown in the Figs. 4-8 are a first storage unit SU1, a second storage unit SU2, a first guide G1, a second guide G2, an overboarding quadrant QA, and an article support system for supporting a flexible article FA, in this case a cable FA, between the first and second storage units SU1, SU2 on the one hand and the first and second guides G1, G2 on the other hand allowing the vessel VE to lower the flexible article, i.e. cable FA, into a sea.

The article support system includes a first support section SS1 extending between the first guide G1 and the overboarding quadrant QA, a second support section SS2 extending between the second guide G2 and the overboarding quadrant QA, a third support section SS3 extending between the first storage unit SU1 and the second support section SS2, and a fourth support section SS4 extending between the second storage unit SU2 and the first support section SS1. The overboarding quadrant QA is configured to support and guide the cable FA between the first and second support sections SS1, SS2.

In this embodiment, the first and second storage units SU1, SU2 are arranged below an upper deck similar to the embodiment of Figs. 1-3. A cable guide system CGS is provided per storage unit SU1, SU2 to guide the cable FA through a respective opening O1, O2 in the upper deck (only schematically indicated in Fig. 6) to above the upper deck to be received by the third and fourth support sections SS3, SS4, respectively.

The first guide G1, the second guide G2, the first support section SS1, the second support section SS2, and the overboarding quadrant QA are arranged on a frame SFR that is moveable relative to the upper deck of the vessel in a substantially horizontal plane as will be explained in more detail below by reference to the Figs. 6-8, in which the substantially horizontal plane extends in the plane of the drawings.

To move the frame SFR, rails RA are provided on the upper deck, which rails RA extend in a direction transverse to a longitudinal axis of the frame SFR, i.e. transverse to a longitudinal axis of the vessel VE, and an actuation system AS is provided to move the frame SFR in a direction parallel to the rails RA and to move the frame SFR in a direction perpendicular thereto, i.e. parallel to the longitudinal axis of the frame SFR or vessel VE. In this embodiment, this may result in the combination of frame SFR and actuation system being moveable in the direction parallel to the rails RA relative to the rails RA and the frame SFR being moveable relative to the actuation system in the direction perpendicular thereto. It is therefore also possible that the frame SFR is provided with rails at its underside to engage with the actuation system AS.

Arranged on the frame SFR is a support structure STR configured to support and guide the cable FA as part of the third support section SS3. In the shown Figures 1-8, the cable FA is guided along a support path starting at the first storage unit SU1 and subsequently including the corresponding cable guide system CGS, the third support section SS3 including the support structure STR, the second support structure SS2, the overboarding quadrant QA, the first support section SS1 and the first guide G1. The cable FA enters the sea from the first guide G1.

Although not shown, a cable FA held by the second storage unit SU2 can be guided into the sea along a support path starting at the second storage unit SU2 and subsequently including the corresponding cable guide system CGS, the fourth support section SS4 including the support structure STR, the first support structure SS1, the overboarding quadrant QA, the second support section SS2 and the second guide G2. Hence, the support structure STR can be part of both the third and fourth support sections SS3, SS4.

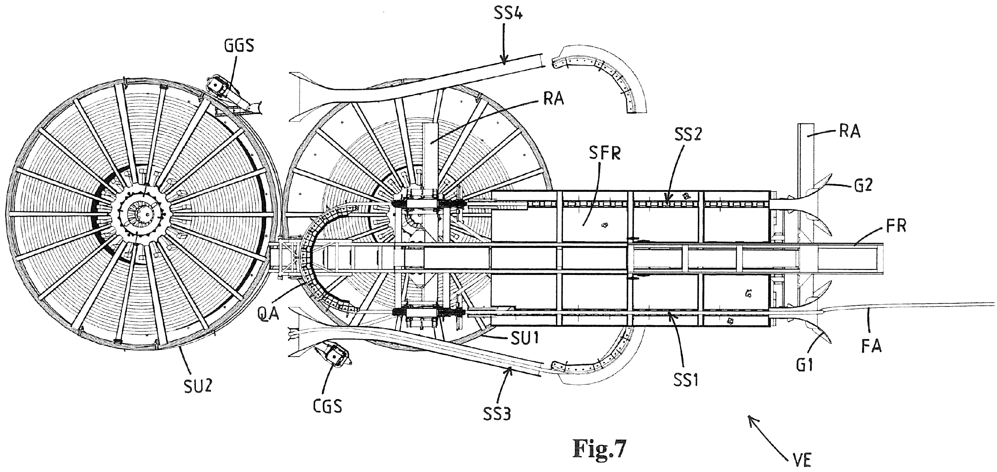

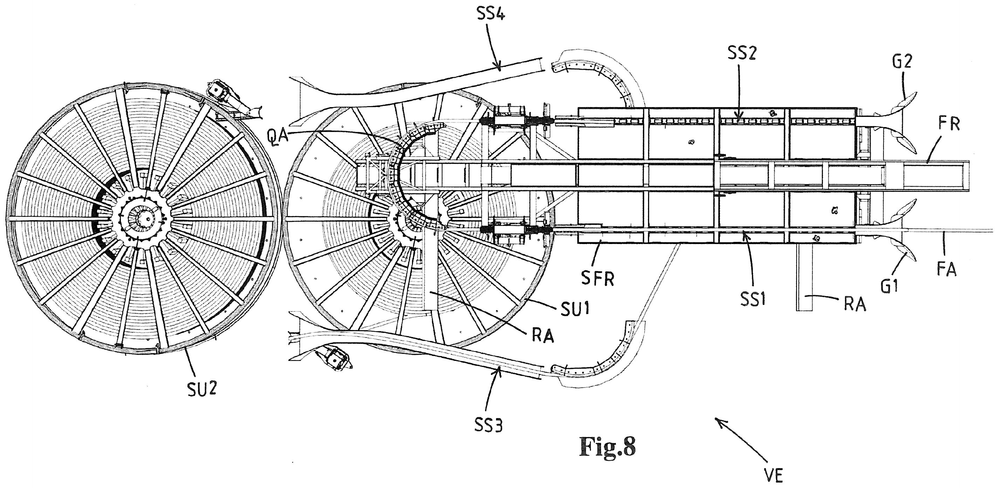

Fig. 6 depicts the frame SFR in a central position within the substantially horizontal plane. To indicate the movability of the frame SFR, reference is made to Figs. 7 and 8. In Fig. 7, the frame SFR has moved to the left, i.e. to the bow of the vessel VE, and to the bottom, i.e. to the port side of the vessel VE, of the drawing, thereby indicating one corner of the substantially horizontal plane. In Fig. 8, the frame SFR has moved to the right, i.e. to the stern of the vessel VE, and to the top, i.e. the starboard side of the vessel VE, of the drawing, thereby indicating an opposite corner fo the substantially horizontal plane. The frame SFR can thus take any position within this rectangular horizontal plane indicated by the two corner positions of Fig. 7 and 8 to compensate for wave-induced motions of the vessel VE.

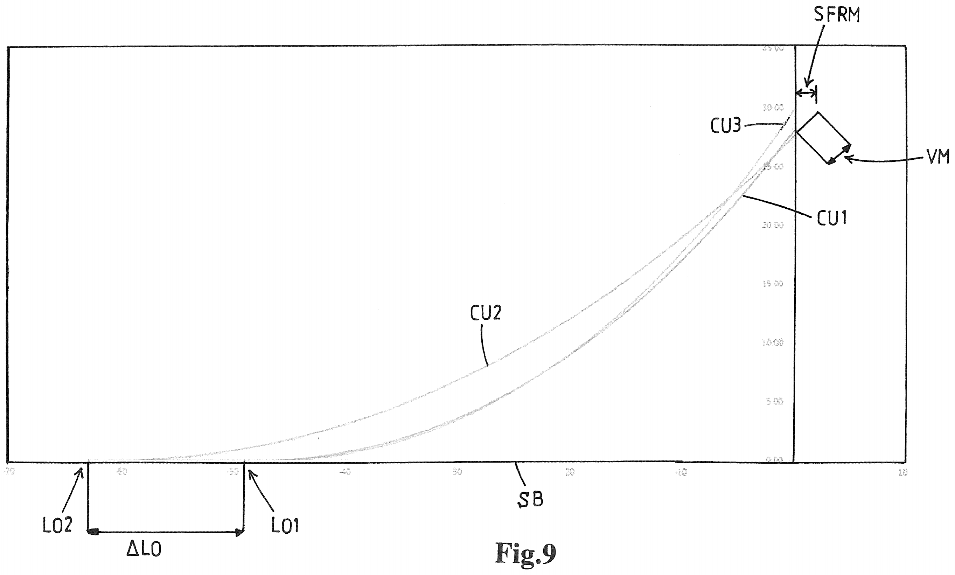

Although the vessel VE of Figs. 4-8 in particular depicts a vessel according to the eighth aspect of the invention, it can include other aspects of the invention as well. For instance, the overboarding quadrant can be used to apply heave compensation according to the first aspect of the invention. However, the depicted vessel is particularly suitable to be used without or at least minimal heave compensation as will be explained below by reference to Fig. 9.

Fig. 9 depicts a shape of the cable between the vessel at the right side of the graph and the sea bottom SB at the left side of the graph for three situations. Curve CU1 is an initial cable shape, e.g. for the situation in which the frame SFR of the vessel VE is in the central position as depicted in Fig. 7. A characteristic of the curve CU1 is the location LO1 where the cable hits the sea bottom SB

As the result of a wave-induced vessel motion VM, in this case moving the vessel to the right and upwards relative to the initial situation, the cable shape changes to the curve CU2. This uncompensated situation also results in a new location LO2 where the cable makes contact with the sea bottom SB. This cable movement is undesired.

Although it is possible to fully compensate for the vessel motion VM, it is possible to only move the frame SFR without heave compensation in horizontal direction as indicated by arrow SFRM resulting in a cable shape as indicated by curve CU3, which is slightly different from curve CU1, but results in the same location LO1 where the cable engages with the sea bottom SB.

Movement of the frame SFR results in different cable lengths between the storage unit SU1 or SU2 and the frame SFR. To deal with these cable length differences, the support structure STR may be moveably arranged on the frame SFR, e.g. to move in a direction parallel to the longitudinal axis of the frame SFR allowing to compensate for cable length differences caused by movement of the frame SFR.

Alternatively, or additionally, the overboarding quadrant QA may be arranged on a carriage CA that is moveable between the position as shown in the Figs. 4-8 at a distance from the first and second support sections SS1, SS2, and a position closer to the first and second support sections SS1, SS2 allowing to compensate for cable length differences caused by movement of the frame SFR and/or to provide heave compensation at least partially.

Also shown in Figs. 4-8 are a first tensioner T1 as part of the first support section SS1 configured to control movement of the cable FA along the first support section SS1, and a second tensioner T2 as part of the second support section SS2 configured to control movement of the cable FA along the second support section SS2. In the Figs. 4-8, the tensioners T1 and T2 are shown in an open configuration allowing for instance to let the overboarding quadrant QA pass the tensioners.

The vessel VE is further provided with a quadrant handling system including a frame FR at the first and second guide side of the frame SFR. The frame FR can be moved between a substantially horizontal orientation to receive the overboarding quadrant QA and a substantially vertical orientation to lower the quadrant into the sea.

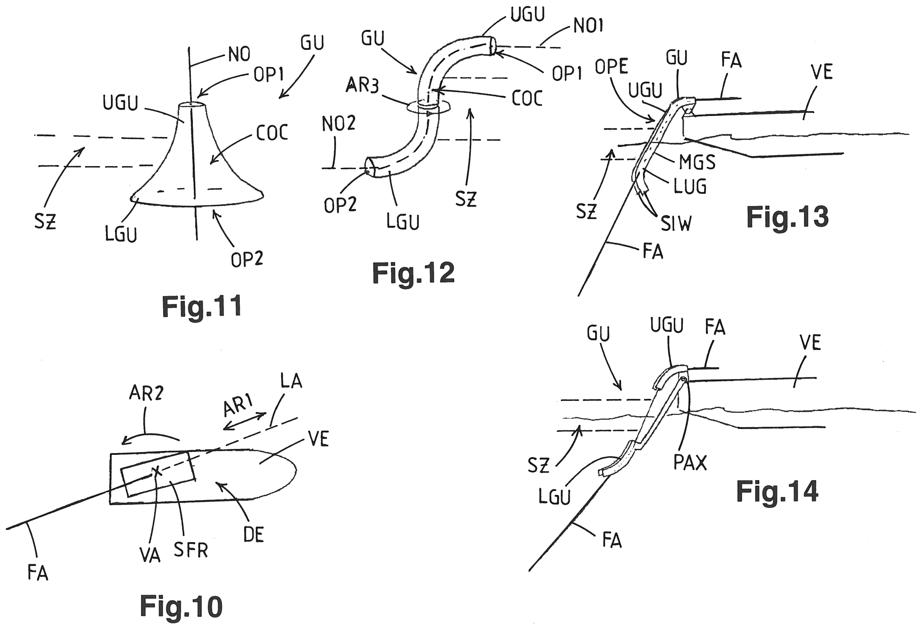

Fig. 10 depicts a top view of a vessel VE, a frame SFR and a flexible article FA that is being lowered from the vessel using the frame SFR. The vessel VE is a vessel according to the eighth aspect of the invention and thus has similar features as for instance the vessel VE of Fig. 4. However, in the embodiment of Fig. 4, the frame SFR is moveable in a horizontal plane in two orthogonal translation directions as defined by the rails, etc.

In this embodiment, the frame SFR is moveable in said substantially horizontal plane relative to the deck DE of the vessel VE by being rotatable about a substantially vertical axis VA, as indicated by arrow AR2, and by being translatable in a longitudinal direction LA of the frame SFR, as indicated by arrow AR1. It will be apparent that the vertical axis VA can be arranged at different positions in the horizontal plane.

Fig. 11 depicts a guide GU for a vessel according to an embodiment of the twelfth aspect of the invention. The guide GU may be an extension of a first or second guide in the above embodiments or may replace the first or second guide.

The guide GU is to be arranged on a vessel for lowering a flexible article, e.g. a cable, into the sea, said vessel further comprising a storage unit for storing a flexible article, and an article support system for supporting the article between the storage unit and the guide GU. The guide GU is configured such that it has an upper portion UGU guiding the flexible article above a splash zone SZ and a lower portion LGU guiding the flexible article below the splash zone SZ.

The upper and lower portions UGU, LGU are connected to each other and have a closed outer contour COC fully enclosing the flexible article when guiding the flexible article through the splash zone SZ. As a result thereof, the splash zone SZ has a reduced effect on the flexible article guided by the guide GU.

The shape of the closed outer contour resembles that of a bell of a trumpet with the size increasing from upper portion to lower portion. The shape may be a part of a paraboloid or hyperboloid or similar-like shape. In this embodiment, a first opening OP1 at the upper portion UGU allows the flexible article to enter the guide GU and a second opening OP2 at the lower portion LGU allows the flexible article to leave the guide GU. Both the first OP1 and second opening OP2 extend in a substantially horizontal plane, i.e. a normal NO to said planes extends substantially vertically.

Fig. 12 depicts a guide GU for a vessel according to another embodiment of the twelfth aspect of the invention. The guide GU is more suitable to replace the first or second guide in the above embodiments.

The guide GU is to be arranged on a vessel for lowering a flexible article, e.g. a cable, into the sea, said vessel further comprising a storage unit for storing a flexible article, and an article support system for supporting the article between the storage unit and the guide GU. The guide GU is configured such that it has an upper portion UGU guiding the flexible article above a splash zone SZ and a lower portion LGU guiding the flexible article below the splash zone SZ.

The upper and lower portions UGU, LGU are connected to each other and have a closed outer contour COC fully enclosing the flexible article when guiding the flexible article through the splash zone SZ. As a result thereof, the splash zone SZ has a reduced effect on the flexible article guided by the guide GU.

The shape of the closed outer contour resembles that of a double-bend tubular, hence, having a constant circular cross-section. The shape may thus be a bend cylindrical shape. In this embodiment, a first opening OP1 at the upper portion UGU allows the flexible article to enter the guide GU and a second opening OP2 at the lower portion LGU allows the flexible article to leave the guide GU. Both the first OP1 and second opening OP2 extend in a substantially vertical plane, i.e. a respective normal NO1, NO2 to said planes extends substantially horizontally.

The lower portion LGU is rotatably mounted to the upper portion UGU as indicated by arrow AR3, so that the opening OP2 can be directed in a plurality of directions relative to the opening OP1.

Fig. 13 depicts a guide GU for a vessel VE according to yet another embodiment of the twelfth aspect of the invention. The guide GU in this case replaces the first or second guide in the above embodiments.

The guide GU is in this embodiment arranged on an aft portion of the vessel VE for lowering a flexible article FA, e.g. a cable, into the sea, said vessel VE further comprising a storage unit for storing a flexible article, and an article support system for supporting the article between the storage unit and the guide GU.

The guide GU is configured such that it has an upper portion UGU guiding the flexible article above a splash zone SZ and a lower portion LGU guiding the flexible article below the splash zone SZ.

The upper and lower portions UGU, LGU are connected to each other and have an u-shaped cross section formed by a main guiding surface MGS and two side walls SIW extending from said main guiding surface. The u-shape results in an opening OPE opposite the main guiding surface allowing the flexible article FA to be positioned in and out of a space defined in between the side walls.

Fig. 14 depicts a guide GU for a vessel VE according to a further embodiment of the twelfth aspect of the invention. The guide GU in this case replaces the first or second guide in the above embodiments.

The guide GU in this embodiment is arranged on an aft portion of the vessel VE for lowering a flexible article FA, e.g. a cable, into the sea, said vessel VE further comprising a storage unit for storing a flexible article, and an article support system for supporting the article between the storage unit and the guide GU.

The guide GU is configured such that it has an upper portion UGU guiding the flexible article above a splash zone SZ and a lower portion LGU guiding the flexible article below the splash zone SZ.

The upper and lower portions UGU, LGU are arranged at a distance from each other, so that a single trajectory for the flexible article is defined between the upper and lower portion extending through the splash zone SZ. The upper and lower portion UGU, LGU are both connected to the vessel VE. The upper portion UGU may be stationary arranged on the vessel while the lower portion LGU may be pivotably arranged on the vessel to pivot about a substantially horizontal pivot axis PAX.

The upper and lower portion UGU, LGU have a u-shaped cross-section as in the embodiment of Fig. 13, but with the opening in the U-shaped being directed in opposite directions, and having a bend shape so that the flexible article is forced in an S-shape.

## Claims

1. Overboarding quadrant for lowering a flexible article into the sea, wherein the overboarding quadrant includes a support for supporting and guiding the flexible article along a guide path, wherein the support includes a plurality of support segments that are moveable relative to each other between a lowering configuration in which the guide path is arcuate and a releasing configuration in which the guide path is substantially straight.

2. Overboarding quadrant according to claim 1, wherein the support segments are only rotatable relative to each other between a first angular orientation corresponding to the lowering configuration and a second angular orientation corresponding to the releasing configuration.

3. Overboarding quadrant according to claim 1 or claim 2, wherein the overboarding quadrant is configured such that the guide path has a single radius of curvature over its entire length in the lowering configuration and each intermediate configuration between the lowering configuration and the releasing configuration.

4. Overboarding quadrant according to claim 3, wherein the support segments are linked together such that when one support segment is moved relative to an adjacent support segment, the radius of curvature along the entire guide path is changed and thus all support segments move accordingly.

5. Overboarding quadrant according to one or more of the preceding claims, wherein the overboarding quadrant includes an actuating system to move the support segments between the lowering and releasing configuration.

6. Overboarding quadrant according to the one or more preceding claims, wherein the overboarding quadrant includes a locking mechanism to lock the position of the support segments, preferably in the lowering configuration and/or releasing configuration, and possibly also in one or more or any intermediate position.

7. Overboarding quadrant according to one or more of the preceding claims, wherein the guide path is semi-circular in the lowering configuration with both ends of the support extending in the same direction.

8. Method for lowering a flexible article into the sea from a vessel, wherein use is made of an overboarding quadrant comprising a support for supporting and guiding the flexible article along a guide path, and wherein the method comprises the following steps:
a) configuring the overboarding quadrant such that the guide path is arcuate;
b) arranging a flexible article along the arcuate guide path with both ends of the flexible article extending into the sea;
c) positioning the overboarding quadrant such that the arcuate guide path is in a substantially vertical plane;
d) lowering the overboarding quadrant into the sea; and
e) adjusting the overboarding quadrant to change the shape of the guide path to be straight.

9. Method according to claim 8, wherein after step e), the overboarding quadrant is close to or on the sea bottom, and preferably, the flexible article is then released from the overboarding quadrant to stay on the sea bottom while the overboarding quadrant is raised to the vessel.

10. Method according to claim 8 or claim 9, wherein the method comprises releasing of the flexible article from the overboarding article in one of the following ways:
- rotating about a longitudinal axis of the support;
- releasing clamps holding the flexible articles;
- removing support members supporting the flexible article; and
- manipulating the flexible article to move away from the overboarding quadrant.

11. Method according to one or more of the claims 8-10, wherein the overboarding quadrant according to one or more of the claims 1-7 is used, wherein in steps a) - d) the overboarding quadrant is in the lowering configuration and in step e) is brought into the releasing configuration.

12. Method according to one or more of the claims 8-11, wherein two wires are connected to the overboarding quadrant during at least steps d) and e), wherein one wire is used to support the weight of the overboarding quadrant and any load applied thereto, and wherein the other wire is used to change the shape of the guide path.

13. Method according to one or more of the claims 8-12, wherein two or more wires are connected to the overboarding quadrant during at least steps d) and e), wherein the change of shape caused in step e) is the result of applying an (additional) tension difference between the two or more wires.
